# EUROPEAN PATENT SPECIFICATION

(11) **EP 0 890 487 B1**
(45) Date of publication and mention of the grant of the patent: **26.03.2003**
(21) Application number: 98109511.0
(22) Date of filing: 26.05.1998
(51) Int. Cl.: B60R 19/52

(54) **Method and apparatus for assembling a radiator cowling for motor vehicles**
Verfahren und Vorrichtung zum Zusammenbau einer Kühlergrillblende eines Kraftfahrzeuges
Procédé et dispositif d'assemblage d'une grille de radiateur pour un véhicule automobile

(30) Priority: 09.07.1997 IT PN970042
(43) Date of publication of application: 13.01.1999
(73) Proprietor: Plastal S.p.A., 33170 Pordenone (IT)
(72) Inventor: Zanot, Roberto, 33080 Porcia, Pordenone (IT)
(74) Representative: Agostini, Agostino

(56) References cited:
- DE-U- 9 404 730

## Description

The present invention refers to a method and apparatus for the assembly of a motor-vehicle radiator cowling comprising a structural grille attached to the front end of the motor-vehicle body, and a frame applied upon said grille and serving a mere aesthetical purpose.

The invention is especially, although not solely, suitable for application in connection with radiator cowlings of the type having a width that is subtantially greater than the height thereof, as this is the case of cowlings used in many of the latest car models.

A radiator cowling of this type is known from the disclosure in the Italian utility model application no PN93U000007 filed by the same Applicant on March 22nd, 1993. Such a cowling is characterized in that it has, on the inner surface and along the peripheral edge of the frame, a first series of flexible elements that are adapted to be snap-fitted into therewith associated apertures provided in the peripheral edge of the grille situated therebelow, as well as a second series of flexible elements which, arranged on the inner surface and along the peripheral portion of the grille, are adapted to be snap-fitted into therewith associated apertures provided in the body of the motor-vehicle.

The assembly of a radiator cowling of this kind is carried out manually at present, and it requires a great care to be taken especially when:
- the radiator cowling has a curved shape, in particular in the direction of its length dimension, rather than a flat shape;
- the radiator cowling comprises one or more portions consisting of emblems that are in turn snap-fitted into preferably a central portion of the grille, possibly provided with an appropriate support; such emblems, as anyone in the art is well aware with, have most frequently a geometrically complex shape and, of course, a marked aesthetical impact on the outlook of the entire motor-vehicle.

It therefore would be desirable, and is actually a main purpose of the present invention, to provide both a method for the mechanized assembly of the radiator cowling and an apparatus to carry out such a method. More precisely, the present invention is aimed at:
- increasing the production efficiency through a marked reduction in the time assigned to the assembly operation;
- minimizing scraps and rejects due to poor quality, particularly to an inaccurate mutual alignment of the parts making up the cowling;
- assuring a quality level that remains practically unaltered throughout the time thanks to the certainty brought about by the frame and the emblem being snap-fitted to the grille in their due positions.

The invention will anyway be more readily understood and appreciated from the description of a preferred embodiment thereof which is given below by way of non-limiting example with reference to the accompanying drawings, in which
- Figure 1 is a flow-chart illustrating schematically the operations provided for by the method according to the invention for assembling a radiator cowling;
- Figure 2 is an exploded view of the parts making up the radiator cowling;
- Figures 3, 4 and 5 are top views of the radiator cowling in three different phases of the assembly thereof;
- Figure 6 is an enlarged-scale view of the A-A section of Figure 5.

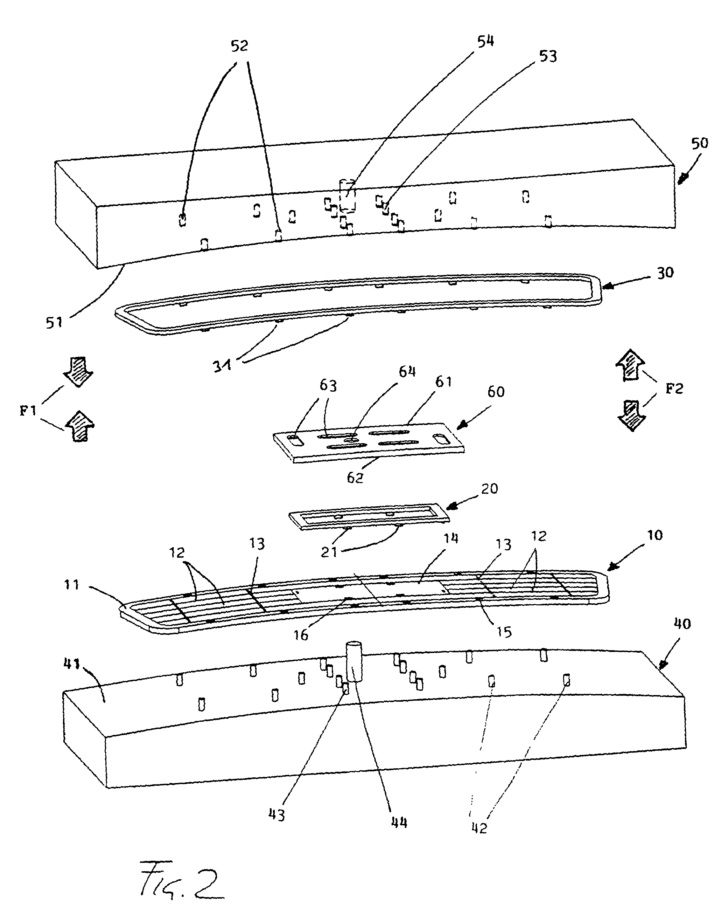

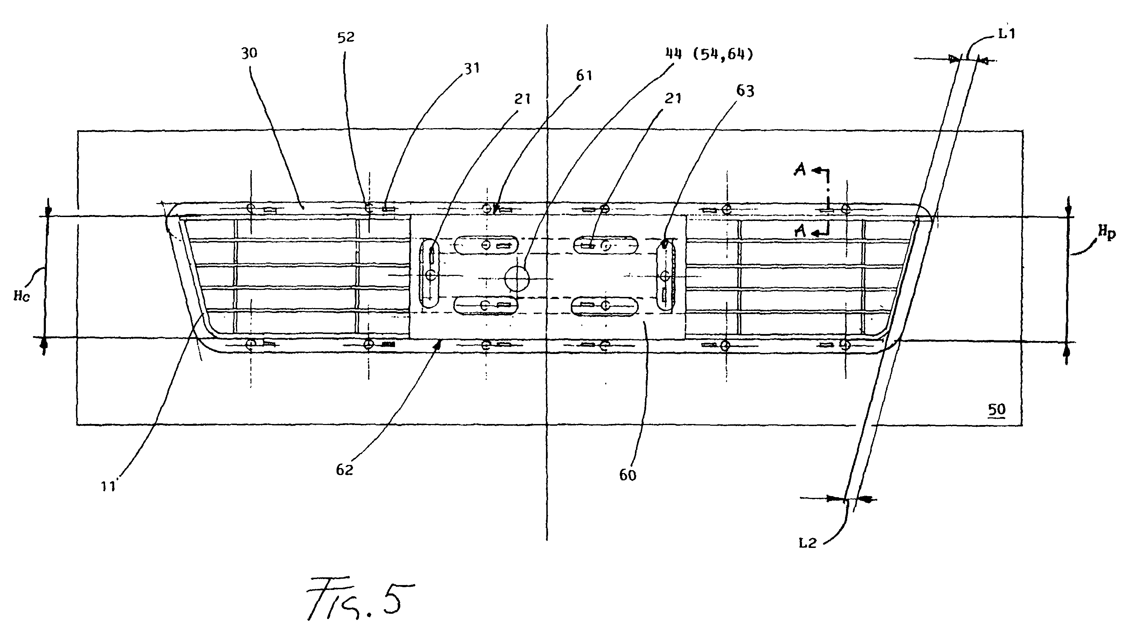

A radiator cowling for motor-vehicles of the afore cited kind, ie. of the type having a curved shape and a width dimension that is substantially greater than the height dimension, consists essentially of three parts, generally made of injection-moulded thermoplastic materials, ie. a structural grille 10, a badge 20 (which, for obvious reasons, is only shown schematically in the Figures) and a frame 30 - see Figure 2. When the assembly of the cowling is completed, the frame 30 reproduces the shape of the peripheral edge 11 of the grille 10 and lies upon such an edge, although only partially, since its width 12 is smaller than the width L1 of said peripheral edge 11, as this can best be seen in Figure 5.

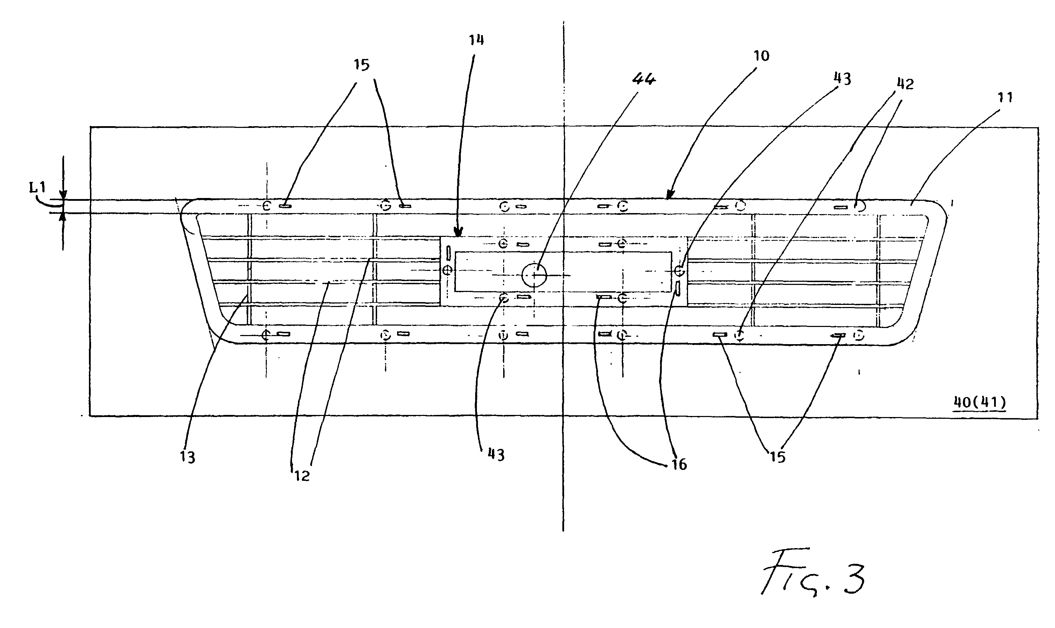

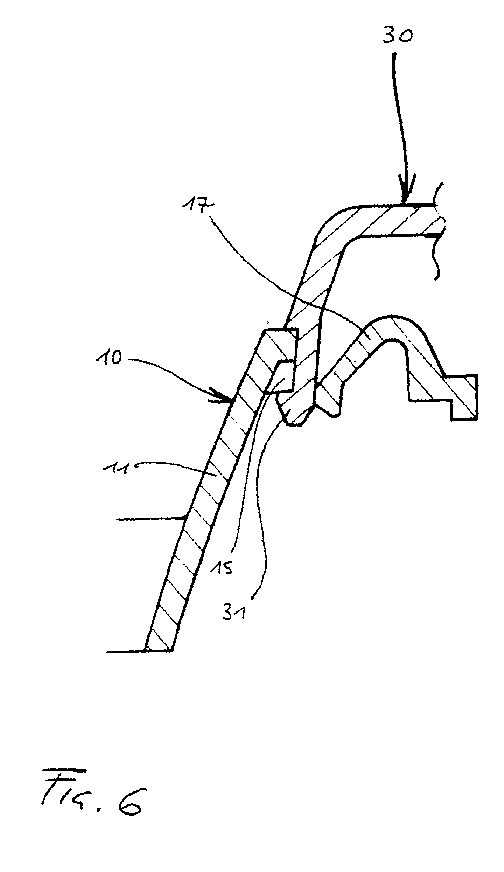

The grille 10, which is adapted to be snap-fitted onto the front end portion of the body of a motor-vehicle (through fastening means, not shown in the Figures, that are similar to those described in the afore mentioned patent application filed by the same Applicant), comprises, further to the above cited peripheral edge 11, horizontal strips 12 and vertical strips 13, as well as a central flat portion 14, for instance in the shape of a rectangular frame, to serve as a support for the badge 20. Along the peripheral edge 11 of the grille 10 and the above mentioned flat central portion 14 there are provided a plurality of elongated apertures 15 and 16 - see Figure 3. An elastic tooth 17 (see Figure 6) is provided to extend in each one of the apertures 15, as well as in each one of the apertures 16 of the flat central portion 14.

On the inner surface of the badge 20 there are provided undercut-type teeth 21 in a number that is equal to that of the above cited elongated apertures 16 provided in the flat central portion 14 (see Figure 2) so as to enable the badge 20 to be snap-fitted to the grille 10 in the manner that will be described further on.

The frame 30, which reproduces the shape of the peripheral edge 11 of the grille 10, but, as this has already been pointed out earlier in this description, has a smaller width with respect thereto, is provided on its inner surface with a plurality of elastic appendices 31 in a number that is equal to that of the above cited elongated apertures 15 provided along the peripheral edge 11 so as to enable the appendices 31 to enter the elongated apertures 15 and be retained there by the associated elastic teeth 17 - see Figure 6.

According to the present invention, for assembling the cowling use is made of an apparatus whose basic component parts are a lower jig 40, an upper jig 50 and an auxiliary centering plate 60 - see Figure 2. Handling means, which are not shown in the Figures since largely known to all those skilled in the art, are provided to ensure both the actuation of the above cited component parts of the apparatus and the handling of the parts that make up the radiator cowling.

On its face 41 opposing the upper jig 50, the lower jig 40 is provided with a first set of ngid pressure devices 42 (pins) in a number that is equal to that of the afore cited elongated apertures 15 provided along the peripheral edge 11 of the grille 10, a second set of pins 43 in a number that is equal to that of the afore cited elongated apertures 16 provided in the flat central portion 14 of the same grille 10, and a big rigid centering spigot 44 - see Figure 2.

On its face 51 opposing the lower jig 40, the upper jig 50 is provided with a first set of pins 52 in a number that is equal to that of the above cited pins 42, a second set of pins 53 in a number that is equal to that of the above cited pins 43, and a calibrated recess 54 having a shape and dimensions that are complementary to the ones of said centering spigot 44 - see Figure 2.

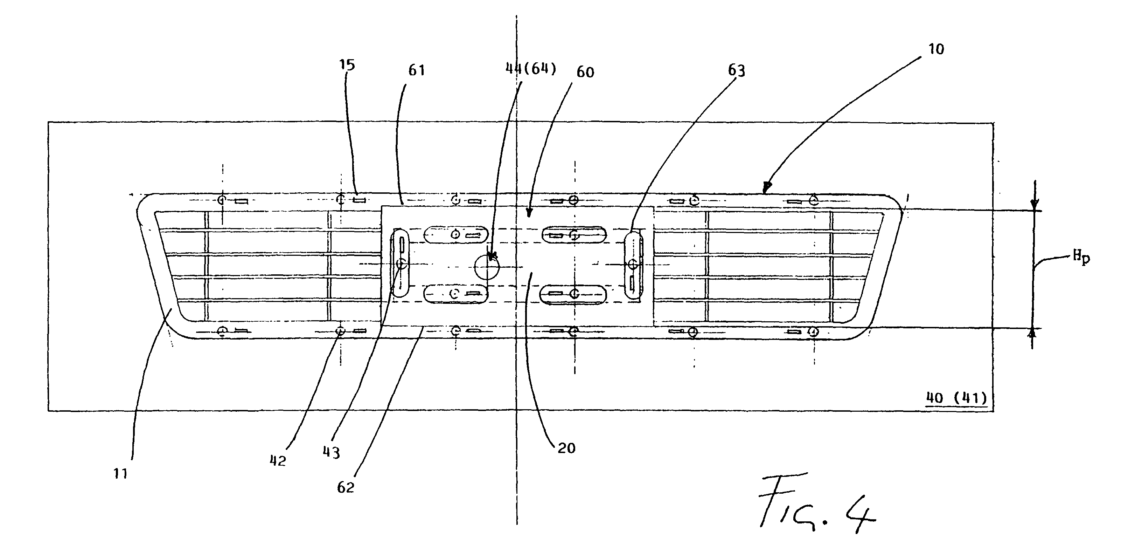

The auxiliary centering plate 60 is substantially in the shape of a rectangle that is somewhat larger than the overall dimensions of the flat central portion 14, and has a height Hp, ie. the distance between its opposed edges 61 and 62 (see Figure 4), which is exactly equal to the corresponding internal dimension Hc of the frame 30 - see Figure 5. The auxiliary centering plate 60 is further provided with elongated apertures 63, the dimensions of which are such as to be able to embrace, with a quite large clearance or play, both the apertures 16 of the flat central portion 14 and the adjacent pins 43 of the lower jig 40 (see Figure 4), as well as a calibrated recess 64 having the same cross-section area as the centering spigot 44.

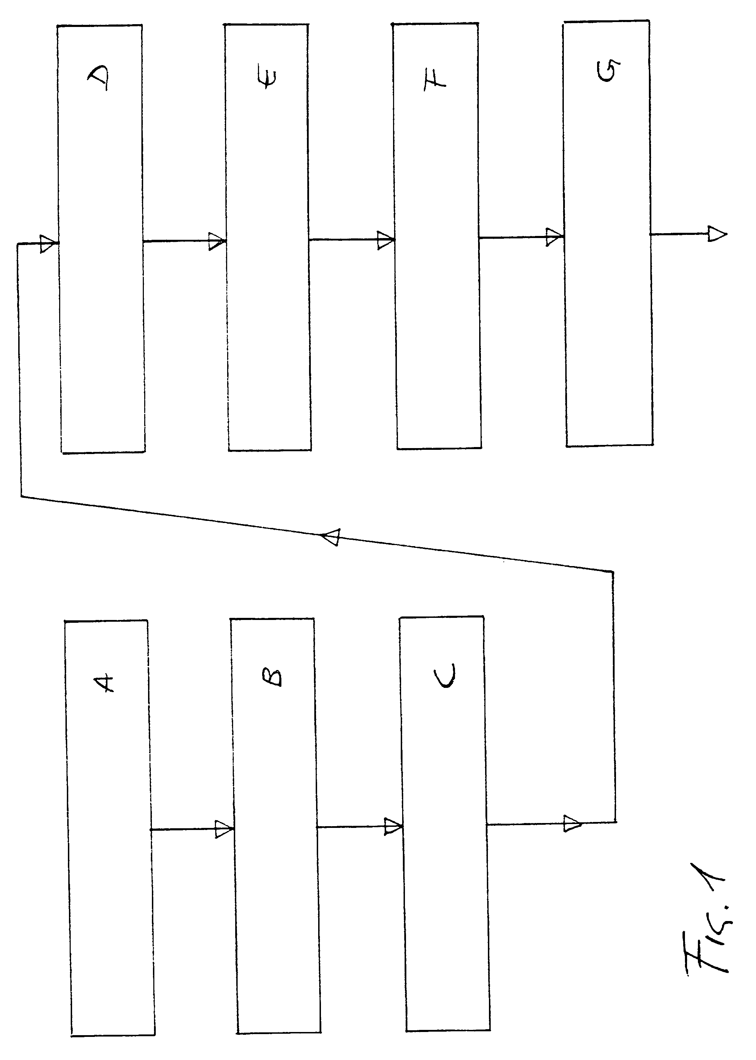

According to the invention, the method for the automated assembly of the radiator cowling essentially includes following phases, as indicated schematically with plain blocks in the flow-chart appearing in Figure 1:
A) The grille 10 is placed on the lower jig 40 in such a manner as to enable the peripheral edge 11 thereof to rest on the free ends of the first set of pins 42, which in this way come to lie close to the apertures 15 with the elastic teeth 17, and the flat central portion 14 thereof to rest on the free ends of the second set of pins 43, which in this way come to lie close to the apertures 16 - see also Figure 3.
B) The badge 20 is placed in position in such a manner as to cause the attachment teeth 21 thereof to fall into alignment with the apertures 16 of the flat central portion 14 of the grille 10, and the centering spigot 44 to protrude upwards, but without interfering with the same badge 20 - see also Figure 3.
C) The auxiliary centering plate 60 is placed above the badge 20; the latter centers itself most accurately with respect to the grille 10 following the introduction of the centering spigot 44 in the calibrated hole 64 in the auxiliary centering plate 60 - see also Figure 4. The centering spigot 44 is in this way caused to also protrude above the badge 20.
D) The frame 30 is placed upon the grille 10 and around the badge 20 with the auxiliary centering plate 60 so that the opposed edges 61 and 62 of the latter act as an abutment for the corresponding sides of the frame. This enables the frame 30 to partially overlap the peripheral edge 11 of the grille 10 and, at the same time, ensures the relative alignment of the same two parts of the cowling - see also Figure 5.
E) The jigs 40 and 50 are caused to move against each other, under pressure, in the direction shown by the arrows F1 in Figure 2 until the centering spigot 44, which is integral with the lower jig 40, is preferably fully inserted in the associated calibrated recess 54 provided in the upper jig 50. Owing to the parts having previously been positioned in the above described manner, the pins 42 and 52, as well as the pins 43 and 53 are in this way caused to lie in a mutually aligned arrangement, with the result that all of the appendices 31 of the grille 10 are able to enter the elongated apertures 15 of the grille 10, where they are retained by the associated elastic teeth 17 (see also Figure 6), while the undercut-type attachment teeth 21 of the badge 20 enter the elongated apertures 16 provided in the flat central portion 14 of the same grille 10 for being retained there. At this point, the assembly of the cowling is completed, after having been, for the repeatedly afore stressed reasons, carried out in a both quick and proper manner.
F) The jigs 40 and 50 and the auxiliary centering plate 60 are moved away from each other in the direction shown by the arrows F2 in Figure 2.
G) The finished cowling is now unloaded from the assembly apparatus and is sent to the assembly line in which the motor-vehicle for which it is intended is being assembled, while possibly passing through one or more dedicated stations provided upstream, for instance for finishing or decorating purposes, which anyway are not relevant to the purpose of the present invention.

From the description given above it can be fully appreciated that the present invention reaches the afore indicated aims as widely demonstrated also by the excellent technical and economic results obtained during the experimental phase that preceded the actual production run.

It will anyway be also appreciated that anyone skilled in the art is at this point able to derive many other variants to the above described embodiment without departing from the scope of the present invention, as for instance in the case of cowlings having a different shape and/or badges that may be arranged eccentrically with respect to the centre line of the grille.

## Claims

1. Mechanized method for the assembly, with the utilization of a first and a second jig (40; 50) provided of sets of rigid pressure devices or pins (42, 43; 52, 53) on their respective mutually opposing surfaces (41; 51), of a radiator-cowling for motor-vehicles which is essentially formed by a grille (10), which has both structural, support and aesthetical functions, a frame (30) and at least a badge (20), wherein along the frame (30) and the peripheral edge (11) of the grille (10) located therebelow there are provided first elastic snap-fitting means and associated apertures (31; 15, 17), and wherein on the inner surface of the badge (20) and on an underlying flat support portion (14) of the same grille (10) there are provided second elastic snap-fitting means and associated apertures (21; 16), said method also comprising the phases in which:
- the grille (10) is placed on said surface (41) of the first jig (40) facing said second jig (50), in such a manner as to cause said set of pins (42, 43) of said first jig (40) to be positioned close to the corresponding apertures (15, 16) provided in said portions (11, 14) of the grid;
- the badge (20) is placed in position on said flat support portion (14) of the grille (10) in such a manner that at least a rigid centering spigot (44) is caused to protrude freely from said surface (41) of said first jig (40);
- centering plate (60) comprising two mutually opposed edges (61, 62), spaced from each other by a distance (Hp) which is equal to the corresponding inner dimension (Hc) of the frame (30), and a calibrated hole (64) having the same cross-section as said rigid centering spigot (44), are placed on the badge (20) in such a manner that, following the introduction of the spigot (44) in the calibrated hole (64), the badge (20) centers itself accurately with respect to the grille;
- the frame (30) is placed on the grille (10) and around the badge (20) so that said two edges (61, 62) of said centering means (60) are capable of abutting against two of the mutually opposed sides thereof, in such a manner that the frame (30) is brought into alignment with the peripheral edge (11) of the grille (10);
- the two jigs (40, 50) are caused to move against each other until said rigid centering spigot (44) of the first jig (40) is inserted in the associated calibrated recess (54) provided in the second jig (50), so as to enable said first and said second elastic means (17, 21, 31) to snap-fit into the associates apertures (15, 16);
- said jigs (40, 50) and said centering means (60) are moved away from each other and so assembled cowling is unloaded from the assembly apparatus.

2. Apparatus for assembling, according to the method as recited in claim 1 above, a radiator cowling for motor-vehicles which consists of a grille (10), a frame (30) and at least an emblem (20), said apparatus comprising a first and a second jig(40; 50), which are provided with sets of rigid pressure devices or pins (42, 43; 52, 53)on the mutually opposing surfaces (41; 51), as well as at least a rigid centering spigot (44) and at least an associated calibrated recess (54), respectively, said apparatus further comprising centering means (60) having two mutually opposing edges (61, 62), which are spaced from each other by a distance (Hp) that is equal to the corresponding inner dimension (Hc) of the frame (30), and a calibrated hole (64) having the same cross-section as said rigid centering spigot (44).

## Patentansprüche

1. Mechanisiertes Verfahren und Nutzung einer ersten und einer zweiten Vorrichtung (40; 50), die mit Gruppen starrer Druckelementen bzw. Zapfen (42, 43; 52, 53) an ihren entsprechenden, einander gegenüberliegenden Flächen (41;51) versehen sind, zum Zusammensetzen einer Kühlerverkleidung für Kraftfahrzeuge, die im Wesentlichen aus einem Gitter (10), das sowohl strukturelle, tragende als auch ästhetische Funktionen hat, einem Rahmen (30) und wenigstens einem Schild (20) besteht, wobei an dem Rahmen (30) und dem Umfangsrand (11) des Gitters (10). das sich darunter befindet, erste elastische Einschnappmittel und dazugehörige Öffnungen (31; 15, 17) vorhanden sind, und wobei an der Innenfläche des Schildes (20) und an einem darunter liegenden flachen Trageabschnitt (14) des Gitters (10) zweite elastische Einschnappmittel und dazugehörige Öffnungen (21; 16) vorhanden sind, wobei das Verfahren des Weiteren die Phasen umfasst, in denen:
- das Gitter (10) auf die Fläche (41) der ersten Vorrichtung (40), die der zweiten Vorrichtung (50) zugewandt ist, so aufgelegt wird, dass die Gruppe von Zapfen (42, 43) der ersten Vorrichtung (40) nahe an den entsprechenden Öffnungen (15, 16) angeordnet ist, die in den Abschnitten (11, 14) des Gitters vorhanden sind;
- das Schild (20) auf dem flachen Trageabschnitt (14) des Gitters (10) so in Position gebracht wird, dass wenigstens ein starrer Zentrierzapfen (44) frei von der Fläche (41) der ersten Vorrichtung (40) vorsteht;
- eine Zentrierplatte (60), die zwei einander gegenüberliegende Ränder (61, 62), die voneinander um eine Strecke (Hp) beabstandet sind, die der entsprechenden Innenabmessung (Hc) des Rahmens (30) gleich ist, und ein kalibriertes Loch (64) mit dem gleichen Querschnitt wie der starre Zentrierzapfen (44) umfasst, so auf das Schild (20) aufgesetzt wird, dass nach dem Einführen des Zapfens (44) in das kalibrierte Loch (64) das Schild (20) sich selbst genau in Bezug auf das Gitter zentriert;
- der Rahmen (30) auf dem Gitter (10) und um das Schild (20) herum so aufgesetzt wird, dass die zwei Ränder (61, 62) des Zentriermittels (60) an zwei der einander gegenüberliegenden Seiten desselben so anschlagen können, dass der Rahmen (30) auf den Umfangsrand (11) des Gitters (10) ausgerichtet wird;
- die zwei Vorrichtungen (40, 50) dazu gebracht werden, sich aufeinander zu zu bewegen, bis der starre Zentrierzapfen (44) der ersten Vorrichtung (40) in die dazugehörige kalibrierte Vertiefung (54) eingeführt wird, die in der zweiten Vorrichtung (50) vorhanden ist, so dass die ersten und die zweiten elastischen Einrichtungen (17, 21, 31) in die dazugehörigen Öffnungen (15, 16) einschnappen können;
- die Vorrichtungen (40, 50) und das Zentriermittel (60) voneinander weg bewegt werden und die so zusammengesetzte Verkleidung von der Zusammensetzeinrichtung entnommen werden.

2. Einrichtung zum Zusammensetzen einer Kühlerverkleidung für Kraftfahrzeuge, die aus einem Gitter (10), einem Rahmen (30) und wenigstens einem Emblem (20) besteht, mit dem Verfahren nach Anspruch 1, wobei die Einrichtung eine erste und eine zweite Vorrichtung (40; 50) umfasst, die mit Gruppen starrer Druckelemente bzw. Zapfen (42, 43; 52, 53) an den einander gegenüberliegenden Flächen (41; 51) sowie mit wenigstens einem starren Zentrierzapfen (44) bzw. wenigstens einer dazugehörigen kalibrierten Vertiefung (54) versehen sind, wobei die Einrichtung des Weiteren ein Zentriermittel (60), das zwei einander gegenüberliegende Ränder (61, 62) aufweist, die voneinander um eine Strecke (Hp) beabstandet sind, die der entsprechenden Innenabmessung (Hc) des Rahmens (30) gleich ist, sowie ein kalibriertes Loch (60) umfasst, das den gleichen Querschnitt hat wie der starre Zentrierzapfen (44).

## Revendications

1. Procédé mécanisé pour l'assemblage, avec utilisation d'une première et d'une deuxième monture (40; 50), munies de jeux de dispositifs ou de broches de pressage (42, 53; 52, 53) rigides sur leurs surfaces (41; 51) mutuellement opposées, respectives, d'une grille de radiateur pour des véhicules automobiles, formée essentiellement d'une calandre (10), ayant des fonctions à la fois structurelles, de support et esthétique, d'un cadre (30) et d'au moins un écusson (20), dans lequel, le long du cadre et du bord périphérique (11) de la calandre (10), au-dessous de celle-ci, sont prévus des premiers moyens de montage par encliquetage élastiques et des ouvertures (31; 15, 17) associées, et dans lequel, sur la surface intérieure de l'écusson (20) et sur une partie support (14) plate sous-jacente de la même calandre (10), sont prévus des deuxièmes moyens de montage par encliquetage élastiques et des ouvertures (21; 16) associées, ledit procédé comprenant également les phases dans lesquelles :
- la calandre (10) est placée sur ladite surface (41) de la première monture (40) faisant face à ladite deuxième monture (50), de manière à provoquer le positionnement dudit jeu de broches (42, 43) de ladite première monture (40), à proximité des ouvertures (15, 16) correspondantes ménagées dans lesdites parties (11, 14) de la grille ;
- l'écusson (20) est placé en position sur ladite partie support (14) plate de la calandre (10), de sorte qu'au moins un téton de centrage (44) rigide puisse faire saillie librement depuis ladite surface (41) de ladite première monture (40) ;
- une plaque de centrage (60) comprenant deux bords (61, 62) mutuellement opposés, espacés l'un de l'autre d'une distance (Hp) égale à la dimension intérieure (Hc) correspondante du cadre (30), et un trou (64) calibré, ayant la même section transversale que ledit téton de centrage (44) rigide, sont placés sur l'écusson (20) de sorte que, suite à l'introduction du téton (44) dans le trou (64) calibré, l'écusson (20) se centre de lui-même de façon précise par rapport à la calandre ;
- le cadre (30) est placé sur la calandre (10) et autour de l'écusson (20), de sorte que lesdits deux bords (61, 62) desdits moyens de centrage (60) soient en mesure de venir buter contre deux des côtés mutuellement opposés de ceux-ci, d'une manière faisant que le cadre (30) soit mis en alignement avec le bord périphérique (11) de la calandre (10) ;
- les deux montures (40, 50) sont déplacées l'une contre l'autre jusqu'à ce que ledit téton (44) de centrage rigide de la première monture (40) soit inséré dans la cavité (54) calibrée associée ménagée dans la deuxième monture (50), pour permettre que lesdits premières et deuxièmes moyens élastiques (17, 21, 31) se montent par encliquetage dans les ouvertures (15, 16) associées ;
- lesdites montures (40, 50) et lesdits moyens de centrage (60) sont écartés l'un de l'autre et la grille ainsi assemblée est déchargée du dispositif d'assemblage.

2. Dispositif d'assemblage, selon le procédé indiqué à la revendication 1 ci-dessus, d'une grille de radiateur pour des véhicules automobiles, formée d'une calandre (10), d'un cadre (30) et d'au moins un écusson (20), ledit dispositif comprenant une première et une deuxième montures (40; 50) pourvues de jeux de dispositifs ou broches de pressage (42, 43; 52; 53) rigides sur les surfaces (41; 51) mutuellement opposées, ainsi que d'au moins un téton de centrage (44) rigide et au moins une cavité (54) calibrée, associée, respectivement, le dispositif comprenant en outre des moyens de centrage (60) ayant deux bords (61, 62) mutuellement opposés, espacés -l'un de l'autre, d'une distance (Hb) égale à la dimension intérieure (Hc) correspondante du cadre (30), et un trou calibré (64) de la même section transversale que ledit téton de centrage (44) rigide.
